# EUROPEAN PATENT SPECIFICATION

(11) **EP 4 044 566 B1**
(45) Date of publication and mention of the grant of the patent: **01.11.2023**
(21) Application number: 20887918.9
(22) Date of filing: 02.11.2020
(51) Int. Cl.: H04M 1/02, G06F 1/16

(54) **TERMINAL HAVING STIFFENER**
ANSCHLUSSKLEMME MIT AUSSTEIFUNG
TERMINAL AYANT UN RAIDISSEUR

(30) Priority: 14.11.2019 CN 201911114348
(43) Date of publication of application: 17.08.2022
(73) Proprietor: Huawei Technologies Co., Ltd., Shenzhen, Guangdong 518129 (CN)
(72) Inventor: ZHOU, Chen, Shenzhen, Guangdong 518129 (CN); LI, Tongtong, Shenzhen, Guangdong 518129 (CN); WANG, Daohu, Shenzhen, Guangdong 518129 (CN); XU, Caiwei, Shenzhen, Guangdong 518129 (CN); WANG, Yong, Shenzhen, Guangdong 518129 (CN)
(74) Representative: Epping - Hermann - Fischer
(86) International application number: PCT/CN2020/125827
(87) International publication number: WO 2021/093624

(56) References cited:
- WO-A1-2018/184289
- WO-A1-2018/228269
- CN-A- 102 118 198
- CN-A- 105 046 190
- CN-A- 109 844 765
- CN-A- 110 071 994
- CN-U- 207 458 083

## Description

This disclosure claims priority to Chinese Patent Application No. 201911114348.2, filed with the China National Intellectual Property Administration on November 14, 2019 and entitled "TERMINAL WITH STIFFENER".

### TECHNICAL FIELD

Embodiments of this disclosure relate to the field of electronic devices, and in particular, to a terminal with a stiffener.

### BACKGROUND

With development of communications technologies, users have an increasing demand for terminal products (such as mobile phones, tablet computers, and notebook computers), and have increasingly high requirements for terminal experience. An in-screen fingerprint recognition technology, as a mature biometric recognition technology, is widely applied to terminals. The in-screen fingerprint recognition technology is a technology in which a fingerprint recognition assembly is placed under a display to complete a fingerprint recognition and unlock process. Compared with conventional fingerprint recognition, in-screen fingerprint recognition does not require an additional fingerprint recognition window to be disposed on a display of a terminal, thereby increasing a screen-to-body ratio of the terminal, and bringing a better experience effect for a user.

A fingerprint recognition assembly includes a fingerprint recognition module and a stiffener connected to the fingerprint recognition module. To reduce thickness of a terminal product, a flat bottom slot is disposed on a housing of the terminal, and the fingerprint recognition assembly is installed in the flat bottom slot, so that the stiffener is securely connected to a bottom of the flat bottom slot through pressing the fingerprint recognition module. However, directly pressing the fingerprint recognition module may easily damage the fingerprint recognition module. Document WO 2018/184289 A1 discloses a fingerprint identification assembly, comprising a fingerprint identification module and a fastening support frame. The fingerprint identification module comprises a touch side and a non-touch side oppositely arranged. A position limiting block is disposed at the touch side. The fastening support frame comprises a connection portion and a support portion provided at two opposite sides of the connection portion. The connection portion is configured to be connected to the non-touch side, such that when the fingerprint identification assembly is being assembled to an assembly target object, the position limiting block is engaged to an outer side of the assembly target object, and the support portion presses against an inner side of the assembly target object. The fingerprint identification assembly is easy to assemble. Furthermore, this document describes a terminal comprising such a fingerprint identification assembly.

Document WO 2018/228269 A1 describes a display module and a mobile terminal. The display module comprises a display screen and an optical fingerprint module. The optical fingerprint module is located on the surface of the display screen facing away from a light emitting surface and is fixedly connected to the display screen. The vertical projection of a fingerprint detection region of the optical fingerprint module on the light emitting surface of the display screen is located within a display region of the display screen, and light can be irradiated to the fingerprint detection region through the display screen. The optical finger module is employed to detect fingerprints, and the optical fingerprint module is provided below the display screen so as to collect fingerprints when fingers press the screen. According to this document, compared to conventional mobile terminals, because the optical fingerprint module is provided below the display screen, no extra space on a front panel of the mobile terminal is needed, and more area can be reserved for disposing the display screen, so that the area of the display screen is increased; thus, the display area of the mobile terminal is increased, and the screen-to-body ratio is improved.

### SUMMARY

Embodiments of this disclosure provide a terminal with a stiffener, so that thickness of a terminal is reduced, and a fingerprint recognition module is not easily damaged when the fingerprint recognition module is installed under a display of the terminal.

The present invention is set out by the set of appended claims. In the following, parts of the description and drawing referring to examples or implementations, which are not covered by the claims are not presented as embodiments of the invention, but as illustrative examples useful for understanding the invention. The embodiments of the invention are determined by the appended claims.

An embodiment of this disclosure provides a terminal with a stiffener. The terminal includes a display, a housing, and a fingerprint recognition assembly. The display and the housing jointly form a receptacle, and the fingerprint recognition assembly is located in the receptacle. The fingerprint recognition assembly includes a fingerprint recognition module and the stiffener, the stiffener includes a first mounting part and at least one first connection part, the first mounting part is configured to carry the fingerprint recognition module, and the first connection part is connected to a side of the first mounting part. The housing includes a support member, the support member is provided with a first accommodation area, the first mounting part is located in the first accommodation area, and the first connection part extends out of the first accommodation area and is connected to the support member.

At least a part of the fingerprint recognition assembly is placed in the first accommodation area on the support member. In this way, the fingerprint recognition assembly is partially located in the support member in the housing, and the fingerprint recognition assembly is prevented from being directly connected to the support member, thereby reducing overall thickness of the mobile phone. When the fingerprint recognition assembly is connected to the first accommodation area, the first connection part is directly connected to the housing of the terminal, and there is no need to directly press the fingerprint recognition module, thereby avoiding damaging the fingerprint recognition module. In a possible implementation, the stiffener further includes at least one second connection part, and the first mounting part and the first connection part are connected through the second connection part. The first mounting part and the first connection part are transited to different surfaces by using the first mounting part.

In a possible implementation, an included angle between the second connection part and the first mounting part is greater than or equal to 90 degrees and less than or equal to 160 degrees. The second connection part and the first mounting part are perpendicular to each other, or the second connection part is inclined towards the first connection part connected to the second connection part, and the included angle between the second connection part and the first mounting part in a clockwise direction is greater than 90 degrees and less than or equal to 160 degrees. In this way, the first connection part is extended to an outer side of the second connection part, so that larger installation space is provided for the fingerprint recognition module.

In a possible implementation, there are at least two first connection parts, the first connection parts each are connected to a different side of the first mounting part, and a quantity of first connection parts is less than or equal to a quantity of sides of the first mounting part. Two or more first connection parts are disposed, so that stability of a connection between the stiffener and the support member is improved.

In a possible implementation, thickness of the first connection part is less than or equal to thickness of the first mounting part. Thickness of the first mounting part is set to be greater than or equal to thickness of the first connection part, so that support strength of the first mounting part is ensured.

In a possible implementation, a bottom wall of the first accommodation area is connected to a lower surface of the support member, and the lower surface of the support member is a surface of the support member facing the housing. In this way, the first accommodation area can accommodate the entire fingerprint recognition module or most of the fingerprint recognition module, so that overall thickness of the terminal is further reduced.

The support member is provided with a second accommodation area used to carry the first connection part, the second accommodation area is connected to the first accommodation area, and an opening of the second accommodation area faces the display. In this way, a part of the first connection part is also located in the support member, so that overall thickness of the terminal is further reduced.

In a possible implementation, a distance between an upper surface of the fingerprint recognition module and the display is less than or equal to a distance between an upper surface of the first connection part and the display, the upper surface of the fingerprint recognition module is a surface of the fingerprint recognition module facing the display, and the upper surface of the first connection part is a surface of the first connection part facing the display. In this way, overall thickness of the terminal is further reduced.

In a possible implementation, the first mounting part, the first connection part, and the second connection part are integrally formed. The stiffener is formed through stamping, injection molding, or machining processing. The processing is convenient, and strength of the stiffener is ensured.

In a possible implementation, a distance between an upper surface of the first connection part and the display is equal to a distance between an upper surface of the support member and the display, the upper surface of the first connection part is a surface of the first connection part facing the display, and the upper surface of the support member is a surface of the support member facing the display. In this way, overall thickness of the terminal is further reduced.

In a possible implementation, the first connection part matches the second accommodation area. In this way, the first connection part can totally cover the second accommodation area, so that overall aesthetics of the support member is improved.

In a possible implementation, the fingerprint recognition assembly includes a circuit board, and a light filter and a fingerprint recognition chip that are disposed in a stacked manner, the circuit board is connected to the fingerprint recognition chip, the light filter faces the display, and the fingerprint recognition chip is connected to the first mounting part.

In a possible implementation, the circuit board includes an extension part and a fastening part connected to the extension part, the fastening part is connected to the first mounting part, the fastening part is provided with a mounting hole, and the fingerprint recognition chip is located in the mounting hole.

In a possible implementation, the first connection part is provided with a first guide trough, and the extension part passes through the first guide trough and is bent to an outer side of the support member. The extension part is guided, through the first guide trough, to a relative position of a processor in the terminal, so that the extension part is conveniently connected to the processor above the support member.

In a possible implementation, the support member is provided with a second guide trough, the second guide trough is connected to the first guide trough, an extension direction of the second guide trough is the same as an extension direction of the first guide trough, and the extension part passes through the first guide trough and the second guide trough and is bent to the outer side of the support member. The second guide trough is disposed, so that a length of the guided extension part is increased, and the extension part is conveniently connected to the processor at different positions.

In a possible implementation, a closing ring is included. The closing ring is located between the display and the circuit board, the closing ring is connected to the circuit board, and the fingerprint recognition chip and the light filter are located in the closing ring. The closing ring is used to protect a metal filament connecting the circuit board and the fingerprint recognition chip, so that the metal filament is prevented from being broken or falling off due to extrusion. In a possible implementation, a process of a method for installing the terminal is as follows: First, the fingerprint recognition assembly is assembled. Then, adhesive is applied to the second accommodation area on a middle frame of the terminal, and the first connection part in the stiffener in the assembled fingerprint recognition assembly is pressed against a bottom wall of the second accommodation area, so that the assembled fingerprint recognition assembly is installed on the middle frame of the terminal. Finally, the rear housing and the display are connected on the middle frame of the terminal.

According to the terminal with a stiffener provided in this embodiment of this disclosure, the at least the part of the fingerprint recognition assembly is placed in the first accommodation area on the support member. In this way, the fingerprint recognition assembly is partially located in the support member in the housing, and the fingerprint recognition assembly is prevented from being directly connected to the support member, thereby reducing overall thickness of the mobile phone. When the fingerprint recognition assembly is connected to the first accommodation area, the first connection part is directly connected to the housing of the terminal, and there is no need to directly press the fingerprint recognition module, thereby avoiding damaging the fingerprint recognition module.

### BRIEF DESCRIPTION OF DRAWINGS

FIG. 1 is a schematic diagram of a structure of a terminal with a stiffener according to an example of this disclosure;
FIG. 2 is a side view of a terminal with a stiffener according to an example of this disclosure;
FIG. 3 is an exploded view of a terminal with a stiffener according to an example of this disclosure;
FIG. 4 is a sectional view at A-A in FIG. 1;
FIG. 5 is an exploded view corresponding to FIG. 4;
FIG. 6 is an exploded view of a middle frame of a terminal with a stiffener according to an example of this disclosure;
FIG. 7 is a schematic diagram of a structure of a stiffener and a fingerprint recognition module in a terminal with the stiffener according to an example of this disclosure;
FIG. 8 is a top view of the stiffener in FIG. 7;
FIG. 9 is a first sectional view at B-B in FIG. 8;
FIG. 10 is a second sectional view at B-B in FIG. 8;
FIG. 11 is a third sectional view at B-B in FIG. 8;
FIG. 12 is a schematic diagram of a structure of a stiffener in a terminal with the stiffener according to an example of this disclosure;
FIG. 13 is a schematic diagram of a structure of a stiffener in a terminal with the stiffener according to an example of this disclosure;
FIG. 14 is a schematic diagram of a structure of a stiffener in a terminal with the stiffener according to an example of this disclosure;
FIG. 15 is a fourth sectional view at B-B in FIG. 8;
FIG. 16 is a schematic diagram of a structure of a first support member, a stiffener, and a fingerprint recognition module in a terminal with the stiffener according to an example of this disclosure;
FIG. 17 is a schematic diagram of a structure of a second support member, a stiffener, and a fingerprint recognition module in a terminal with the stiffener according to an example of this disclosure;
FIG. 18 is a partial schematic diagram of a metal middle plate of a terminal with a stiffener according to an example of this disclosure;
FIG. 19 is a schematic diagram of a structure of a third support member, a stiffener, and a fingerprint recognition module in a terminal with the stiffener according to an example of this disclosure;
FIG. 20 is an exploded view corresponding to FIG. 4;
FIG. 21 is a schematic diagram of a structure of a stiffener in a terminal with the stiffener according to an example of this disclosure; and
FIG. 22 is a schematic diagram of a structure of a stiffener in a terminal with the stiffener according to an example of this disclosure.

Description of reference signs:
10-display;
20-housing;
21- rear cover;
22-middle frame; 221-metal middle plate; 222-side frame; 223-first accommodation area; 224-second accommodation area; 225-second guide trough;
30-fingerprint recognition assembly;
31-fingerprint recognition module; 311-circuit board; 3111-extension part; 3112-fastening part; 312-light filter; 313-fingerprint recognition chip; 314-closing ring; 315-first foam; 316-second foam; 317-first connection adhesive; 318-second connection adhesive;
32-stiffener; 321-first connection part; 3211-first guide trough; 322-first mounting part; 323-second connection part;
40-receptacle; and
C-included angle.

### DETAILED DESCRIPTION

Terms used in implementations of this disclosure are merely used to explain specific examples of this disclosure, but are not intended to limit this disclosure. The following describes implementations of examples of this disclosure in detail with reference to accompanying drawings.

Examples of this disclosure provide a terminal, including but not limited to a mobile or fixed terminal with a display and a housing, such as a mobile phone, a tablet computer, a notebook computer, an ultra-mobile personal computer (ultra-mobile personal computer, UMPC), a netbook, a POS machine, a personal digital assistant (personal digital assistant, PDA), a wearable device, or a virtual reality device.

A sectional view is mainly used to illustrate an internal structure shape of a part, that is, an internal structure of the part after cutting is performed at a section (a plane or a curved surface). A sectional view at A-A indicates a diagram of an internal structure of a part after cutting is performed at a position A-A. A sectional view at B-B has the same meaning as the sectional view at A-A, and is not described again.

The following describes in detail the terminal with a stiffener provided in this disclosure by using specific examples. The following several specific examples may be combined with each other. Same or similar content is not described repeatedly in different examples. For ease of description, the following examples are described in detail by using an example in which the terminal is a mobile phone.

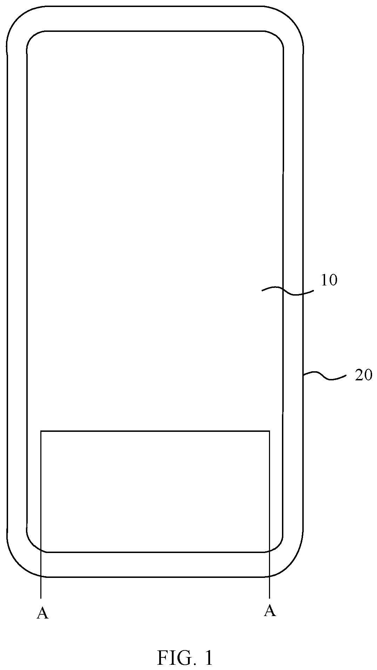

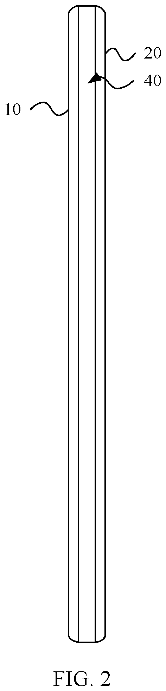

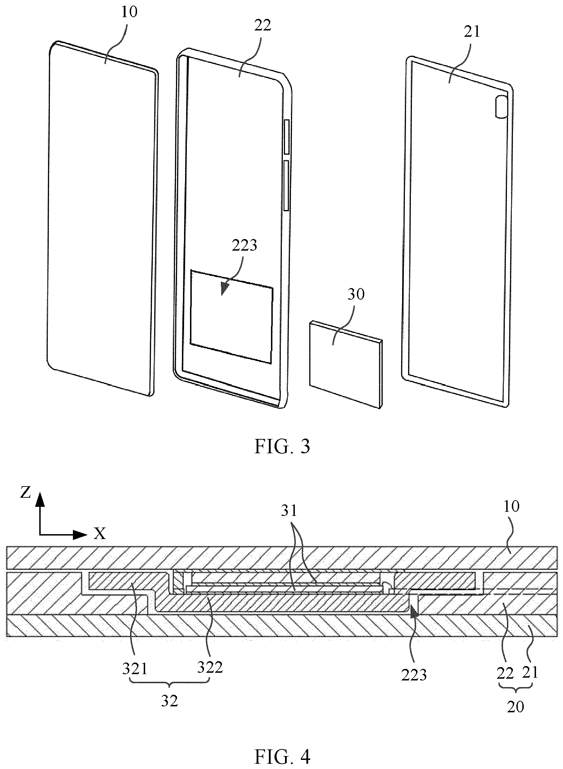

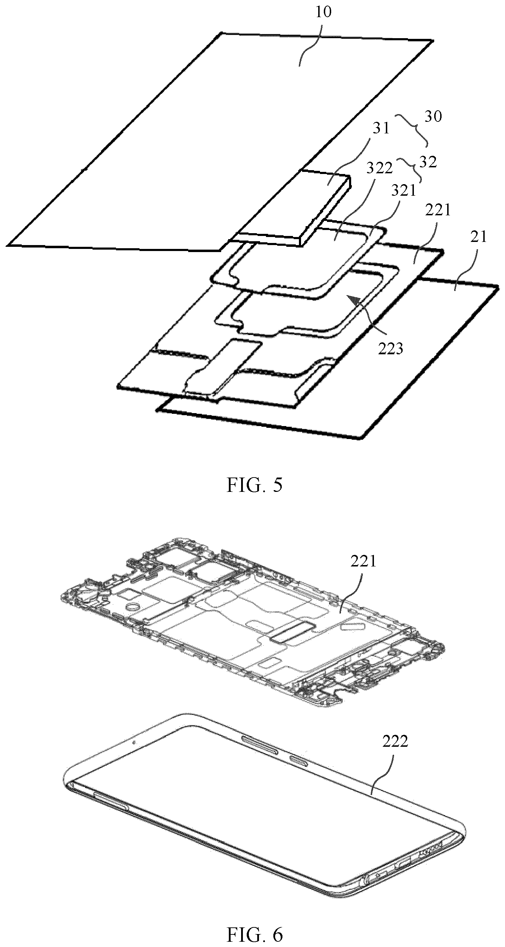

FIG. 1 is a schematic diagram of a structure of a terminal with a stiffener according to an example of this disclosure. FIG. 2 is a side view of a terminal with a stiffener according to an example of this disclosure. FIG. 3 is a side view of a terminal with a stiffener according to an example of this disclosure. FIG. 3 is an exploded view of a terminal with a stiffener according to an example of this disclosure. FIG. 4 is a sectional view at A-A in FIG. 1. FIG. 5 is an exploded view corresponding to FIG. 4. FIG. 6 is an exploded view of a middle frame of a terminal with a stiffener according to an example of this disclosure. As shown in FIG. 1 and FIG. 3, the mobile phone provided in examples of this disclosure includes a display 10, a housing 20, and a fingerprint recognition assembly 30.

As shown in FIG. 2 and FIG. 3, the display 10 and the housing 20 jointly form a receptacle 40, and the fingerprint recognition assembly 30 is located in the receptacle 40.

The housing 20 includes a rear cover 21 and a middle frame 22. The middle frame 22 is located between the display 10 and the rear cover 21. The display 10 is connected to one surface of the middle frame 22, and the rear cover 21 is connected to the other surface of the middle frame 22. The display 10, the rear cover 21, and the middle frame 22 jointly form the receptacle 40 that can accommodate the fingerprint recognition assembly 30. The mobile phone further includes a circuit board (not shown in the figure) and a battery (not shown in the figure). The circuit board and the battery may be disposed on the middle frame 22. For example, the circuit board and the battery are disposed on the surface of the middle frame 22 facing the rear cover 21.

When the battery is disposed on the middle frame 22, for example, a battery compartment may be disposed on the surface of the middle frame 22 facing the rear cover 21, and the battery is installed in the battery compartment. In examples of this disclosure, the battery may be connected to the circuit board and a charging management module through a power management module. The power management module receives input of the battery and/or input of the charging management module, and supplies power to a processor, an internal memory, an external memory, the display 10, a camera, a communications module, and the like. The power management module may further be configured to monitor parameters such as a battery capacity, a battery cycle count, and a battery health status (electric leakage or impedance). In some other examples, the power management module may alternatively be disposed in a processor of the circuit board. In some other examples, the power management module and the charging management module may alternatively be disposed in a same component.

The display 10 may be an organic light-emitting diode (Organic Light-Emitting Diode, OLED) display, or may be a liquid crystal display (Liquid Crystal Display, LCD). It should be understood that the display 10 may include a display component and a touch component. The display component is configured to output display content to a user, and the touch component is configured to receive a touch event entered by the user on the display 10.

The rear cover 21 may be a metal rear cover, a glass rear cover, a plastic rear cover, or a ceramic rear cover. A material of the rear cover 21 is not limited in this example of this disclosure.

As shown in FIG. 4 and FIG. 5, in this example, the fingerprint recognition assembly 30 includes a fingerprint recognition module 31 and a stiffener 32. The stiffener 32 includes a first mounting part 322 configured to carry the fingerprint recognition module 31 and at least one first connection part 321, and the first connection part 321 is connected to a side of the first mounting part 322.

The housing 20 includes a support member. The support member is provided with a first accommodation area 223. The first mounting part 322 is located in the first accommodation area 223. The first connection part 321 extends out of the first accommodation area 223 and is connected to the support member.

The fingerprint recognition assembly 30 includes a sensing transmission part and a physical connection part. The sensing transmission part in the fingerprint recognition assembly 30 includes the fingerprint recognition module 31, and the physical connection part in the fingerprint recognition assembly 30 includes the stiffener 32.

The support member may be the middle frame 22, and the fingerprint recognition assembly 30 may be disposed on the middle frame 22. For example, the fingerprint recognition assembly 30 is disposed on a surface of the middle frame 22 facing the display 10. When a finger of a user touches the display 10, light emitted by the display 10 penetrates a surface of the display 10, and illuminates a fingerprint texture of the finger of the user. Fingerprint-reflected light penetrates the display 10 and returns to the fingerprint recognition assembly 30. Finally, a fingerprint image is formed in the fingerprint recognition assembly 30 for recognition. When the fingerprint recognition assembly 30 is disposed on the middle frame 22, the fingerprint recognition assembly 30 is parallel to the middle frame 22, so that the fingerprint recognition assembly 30 can accurately recognize the fingerprint generated when the finger of the user is in contact with the display 10. Alternatively, for reasons such as processing precision and mounting precision, there may be an included angle between the fingerprint recognition assembly 30 and the middle frame 22, provided that the fingerprint recognition assembly 30 disposed on the middle frame 22 can perform fingerprint recognition. This is not limited in this example.

As shown in FIG. 4 to FIG. 6, the middle frame 22 may include a metal middle plate 221 and a side frame 222, and the side frame 222 is disposed around the periphery of the metal middle plate 221. For example, the side frame 222 may include a top edge and a bottom edge that are disposed opposite to each other, and a left edge and a right edge that are located between the top edge and the bottom edge and that are disposed opposite to each other. A connection manner between the side frame 222 and the metal middle plate 221 includes but is not limited to welding, clamping, or integrated injection molding. A material of the metal middle plate 221 may be aluminum, aluminum alloy, or stainless steel. A material of the side frame 222 may be metal, glass, plastic, or ceramic. It should be noted that the material of the metal middle plate 221 and the material of the side frame 222 include but are not limited to the foregoing material.

In this example, the fingerprint recognition assembly 30 is disposed on the metal middle plate 221 of the middle frame 22. The fingerprint recognition assembly 30 is disposed on a surface of the metal middle plate 221 facing the display 10. A first accommodation area 223 is disposed on the metal middle plate 221. The fingerprint recognition assembly 30 is placed in the first accommodation area 223. The fingerprint recognition module 31 faces the display 10. The first mounting part 322 in the stiffener 32 is located in the first accommodation area 223. The first connection part 321 connected to the side of the first mounting part 322 extends out of the first accommodation area 223 and is connected to the metal middle plate 221. The stiffener 32 is configured to shield light, to prevent light under the fingerprint recognition assembly 30 from being transmitted to the fingerprint recognition assembly 30. In addition, the first connection part 321 in the stiffener 32 is configured to connect to the metal middle plate 221, and the first mounting part 322 in the stiffener 32 is configured to support the fingerprint recognition module 31.

The first accommodation area 223 may be but is not limited to be located between the middle part and the lower end of the metal middle plate 221, that is, when the user holds the mobile phone, a thumb of the user is located between the middle part and the lower end of the display 10, and the first accommodation area 223 in which the fingerprint recognition assembly 30 is placed is disposed in the area, to facilitate fingerprint recognition of the user. A connection manner between the first accommodation area 223 and the metal middle plate 221 includes but is not limited to bonding.

After the first connection part 321 extends out of the first accommodation area 223, a distance between an upper surface of the first connection part 321 and the display 10 is less than or equal to a distance between an upper surface of the fingerprint recognition module 31 and the display 10. The upper surface of the first connection part 321 is a surface of the first connection part 321 facing the display 10, an upper surface of the first mounting part 322 is a surface of the first mounting part 322 facing the display 10, and the upper surface of the fingerprint recognition module 31 is a surface of the fingerprint recognition module 31 facing the display 10. In other words, the upper surface of the first connection part 321 is located between the upper surface of the first mounting part 322 and the upper surface of the fingerprint recognition module 31, or the upper surface of the first connection part 321 is aligned with the upper surface of the fingerprint recognition module 31.

The fingerprint recognition module 31 may be a cuboid, a cube, a cylinder, or an irregular shape. Correspondingly, the first mounting part 322 is a cuboid, a cube, a cylinder, or an irregular shape that matches the shape of the fingerprint recognition module 31.

In this example, to reduce overall thickness of the mobile phone (namely, a height in a Z direction in FIG. 5), the following thickness may also be understood as a height of the part in the Z direction. The first accommodation area 223 is disposed on the metal middle plate 221, and the first mounting part 322 in the stiffener 32 is located in the first accommodation area 223. In other words, at least a part of the fingerprint recognition assembly 30 is placed in the first accommodation area 223. In this way, the fingerprint recognition assembly 30 is partially located in the metal middle plate 221, so that the height in the Z direction in FIG. 5 is reduced, and the fingerprint recognition assembly 30 is prevented from being directly connected to the metal middle plate 221, thereby reducing overall thickness of the mobile phone.

In addition, the first mounting part 322 in the stiffener 32 carries the fingerprint recognition module 31, that is, the fingerprint recognition module 31 is connected to the first mounting part 322, and the first connection part 321 connected to the side of the first mounting part 322 extends out of the first accommodation area 223 and is connected to the metal middle plate 221. In this way, when the fingerprint recognition assembly 30 is connected to the first accommodation area 223, the first connection part 321 is directly connected to the metal middle plate 221, and there is no need to directly press the fingerprint recognition module 31, thereby avoiding damaging the fingerprint recognition module 31.

Thickness of the stiffener 32 may range from 0.2 mm to 0.4 mm, thickness of the metal middle plate 221 may range from 0.2 mm to 0.4 mm, and thickness of an adhesive layer connected between the stiffener 32 and the metal middle plate 221 may range from 0.02 mm to 0.05 mm. When the fingerprint recognition assembly 30 is directly connected to the metal middle plate 221, overall thickness of the mobile phone is a sum of thickness of the display 10, thickness of the fingerprint recognition assembly 30, the thickness of the metal middle plate 221, and thickness of the rear cover 21. When the thickness of the display 10 and the thickness of the rear cover 21 remain unchanged, the overall thickness of the mobile phone may be reduced by 0.22 mm to 0.45 mm after the fingerprint recognition assembly 30 is partially located in the metal middle plate 221. It should be noted that the thickness of the stiffener 32 and the thickness of the metal middle plate 221 are not limited to the foregoing value intervals, and the thickness of the stiffener 32 and the thickness of the metal middle plate 221 are different for different mobile phones. The foregoing is merely an example for description.

It may be understood that the structure shown in this example of this disclosure does not constitute a specific limitation on the mobile phone. In some other examples of this disclosure, the mobile phone may include more or fewer components than those shown in the figure, or some components may be combined, or some components may be split, or there may be a different component layout. For example, the mobile phone may further include components such as a camera (for example, a front-facing camera and a rear-facing camera) and a flash.

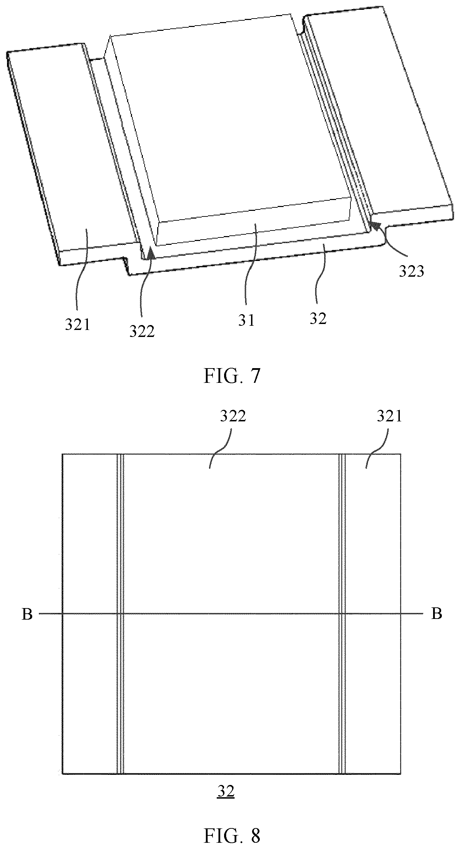

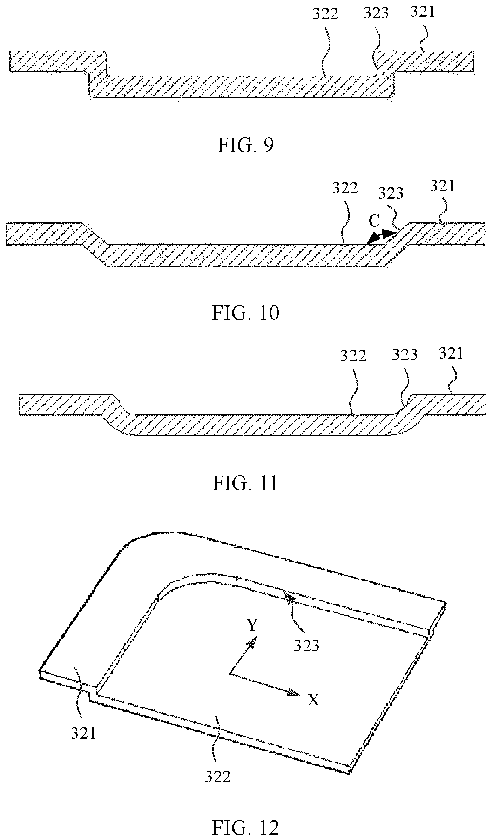

FIG. 7 is a schematic diagram of a structure of a stiffener and a fingerprint recognition module in a terminal with the stiffener according to an example of this disclosure. FIG. 8 is a top view of the stiffener in FIG. 7. FIG. 10 is a second sectional view at B-B in FIG. 8. As shown in FIG. 4, FIG. 5, FIG. 7, FIG. 8, and FIG. 10, in this disclosure, the first mounting part 322 in the stiffener 32 is configured to carry the fingerprint recognition module 31, and the first connection part 321 in the stiffener 32 extends out of the first accommodation area 223 and is connected to the support member, so that the fingerprint recognition assembly 30 can be securely connected to the housing 20. In other words, the first mounting part 322 and the first connection part 321 are located on different surfaces. Therefore, as shown in FIG. 7, in some examples of this disclosure, the stiffener 32 further includes at least one second connection part 323, the first mounting part 322 is connected to the first connection part 321 through the second connection part 323, and the first mounting part 322 and the first connection part 321 are transited to different surfaces by using the first mounting part 322.

After the first mounting part 322 and the first connection part 321 are connected through the second connection part 323, the first mounting part 322 is parallel to the first connection part 321, or there is an included angle between the first mounting part 322 and the first connection part 321, provided that the fingerprint recognition module 31 disposed on the first mounting part 322 can perform fingerprint recognition. An included angle C between the second connection part 323 and the first mounting part 322 is greater than or equal to 90 degrees and less than or equal to 160 degrees. That is, the second connection part 323 and the first mounting part 322 may be perpendicular to each other, or the second connection part 323 is inclined towards the first connection part 321 connected to the second connection part 323, and the included angle between the second connection part 323 and the first mounting part 322 in a clockwise direction is greater than 90 degrees and less than or equal to 160 degrees. In this way, the first connection part 321 is extended to an outer side of the second connection part 323, so that larger installation space is provided for the fingerprint recognition module 31.

The first mounting part 322, the first connection part 321, and the second connection part 323 are integrally formed. The stiffener may be formed through stamping, injection molding, or machining processing. The processing is convenient, and strength of the stiffener is ensured.

Optionally, there is a gap between a side surface of the fingerprint recognition module 31 and the second connection part 323. In other words, after the lower surface of the fingerprint recognition module 31 is connected to the upper surface of the first mounting part 322, there is the gap between the side surface of the fingerprint recognition module 31 and the second connection part 323, and the gap provides installation space for the fingerprint recognition module 31. The gap between the side surface of the fingerprint recognition module 31 and the second connection part 323 may be determined according to an actual mounting requirement. This is not limited in this example.

The second connection part 323 may be a plane, and the second connection part 323 may be a curved face. The following describes the structure of the stiffener 32 by using several possible implementations of the second connection part 323.

FIG. 9 is a first sectional view at B-B in FIG. 8. As shown in FIG. 9, in a possible implementation, the stiffener 32 includes first connection parts 321, a first mounting part 322, and a second connection part 323. There are two first connection parts 321, the second connection part 323 is a plane, the second connection part 323 is perpendicular to the first mounting part 322, and the first mounting part 322 is parallel to the first connection part 321. In other words, the first connection parts 321, the second connection part 323, and the first mounting part 322 form two consecutive right-angled steps, the first connection parts 321 and the first mounting part 322 are surfaces of two adjacent steps respectively, the second connection part 323 is a side wall connecting the surfaces of the two adjacent steps, the second connection part 323 is perpendicular to the first mounting part 322, the second connection part 323 is also perpendicular to the first connection parts 321, and the first mounting part 322 is parallel to the first connection parts 321. In this way, the stiffener 32 may be stamped and formed, so as to facilitate processing of the stiffener 32.

As shown in FIG. 10, in a possible implementation, the stiffener 32 includes first connection parts 321, a first mounting part 322, and a second connection part 323. There are two first connection parts 321, the second connection part 323 is a plane, an included angle between the second connection part 323 and the first mounting part 322 in a clockwise direction is greater than 90 degrees and less than or equal to 160 degrees, and the first mounting part 322 is parallel to the first connection parts 321. In other words, the first connection parts 321, the second connection part 323, and the first mounting part 322 form two consecutive steps. The first connection parts 321 and the first mounting part 322 are surfaces of two adjacent steps respectively. The second connection part 323 is a side wall connecting the surfaces of the two adjacent steps. The side wall is a slope, and the side wall is inclined towards the second connection part 323. The first mounting part 322 is connected to the first connection parts 321 on the slope. In this way, space of the first mounting part 322 is increased, thereby facilitating placing the fingerprint recognition module 31 in the first mounting part 322. An included angle between the second connection part 323 and the first mounting part 322 may be greater than 90 degrees and less than 180 degrees.

FIG. 11 is a third sectional view at B-B in FIG. 8. As shown in FIG. 11, in a possible implementation, the stiffener 32 includes first connection parts 321, a first mounting part 322, and a second connection part 323. There are two first connection parts 321, the second connection part 323 is a curved face, and the first mounting part 322 is parallel to the first connection parts 321. In other words, the first connection parts 321, the second connection part 323, and the first mounting part 322 form two consecutive steps. The first connection parts 321 and the first mounting part 322 are surfaces of two adjacent steps respectively. The second connection part 323 is a side wall connecting the surfaces of the two adjacent steps. The side wall is the curved face, and the first mounting part 322 is connected to the first connection parts 321 on the curved face. In this way, when the fingerprint recognition module 31 is placed in the first mounting part 322, the fingerprint recognition module 31 is prevented from colliding with the first mounting part 322. It should be noted that a shape of the second connection part 323 in the stiffener 32 is not limited to the foregoing implementations, and the foregoing implementations are only some examples. A quantity of first connection parts 321 in the stiffener 32 may be one, two, or more, and it is not limited to the two first connection parts 321 shown in FIG. 7.

To improve stability of a connection between the stiffener 32 and the support member (the middle frame 22), in this disclosure, two or more first connection parts 321 may be disposed in the stiffener 32. Correspondingly, two or more second connection parts 323 may be disposed, and each first connection part 321 may be connected to a different side of the first mounting part 322 by using a different second connection part 323. A structure of a stiffener 32 is described by using possible implementations of quantities and positions of the first connection part 321. For ease of description, that a shape of the first mounting part 322 is a cuboid is used for description.

As shown in FIG. 7, in a possible implementation, there are two first connection parts 321 and two second connection parts 323 in the stiffener 32, and the two first connection parts 321 are located on opposite sides of the first mounting parts 322. That is, when a shape of the first mounting part 322 is a cuboid, the two first connection parts 321 are respectively located on two sides in a length direction of the first mounting part 322, or the two first connection parts 321 are respectively located on two sides in a width direction of the first mounting part 322. The two sides in the length direction of the first mounting part 322 or the two sides in the width direction of the first mounting part 322 are respectively connected to the second connection parts 323, and are connected to the first connection part 321 through the second connection parts 323. Lengths of the first connection parts 321 in extension directions may be the same, that is, the two first connection parts 321 are symmetrically disposed relative to the first mounting part 322. Lengths of the first connection parts 321 in extension directions may be different, for example, a length of a 1^{st} first connection part 321 in an X direction in FIG. 11 is greater than a length of a 2^{nd} first connection part 321 in the X direction in FIG. 11.

FIG. 12 is a schematic diagram of a structure of a stiffener in a terminal with the stiffener according to an example of this disclosure. As shown in FIG. 12, in a possible implementation, there are two first connection parts 321 and two second connection parts 323 in the stiffener 32, the two first connection parts 321 are separately located on adjacent sides of a first mounting part 322, and each first connection part 321 is connected to one side of the first mounting part 322 by using one second connection part 323. That is, when a shape of the first mounting part 322 is a cuboid, the two first connection parts 321 are respectively located on a side in a length direction and a side in a width direction that are of the first mounting part 322 and that are connected to each other. Lengths of the first connection parts 321 in extension directions may be the same. For example, a length of a 1^{st} first connection part 321 in an extension direction (in an X direction) in FIG. 12 is equal to a length of a 2^{nd} first connection part 321 in an extension direction (in a Y direction) in FIG. 12. Lengths of the first connection parts 321 in extension directions may be different. For example, a length of a 1^{st} first connection part 321 in an extension direction (in an X direction) in FIG. 12 is greater than, less than, or equal to a length of a 2^{nd} first connection part 321 in an extension direction (in a Y direction) in FIG. 12.

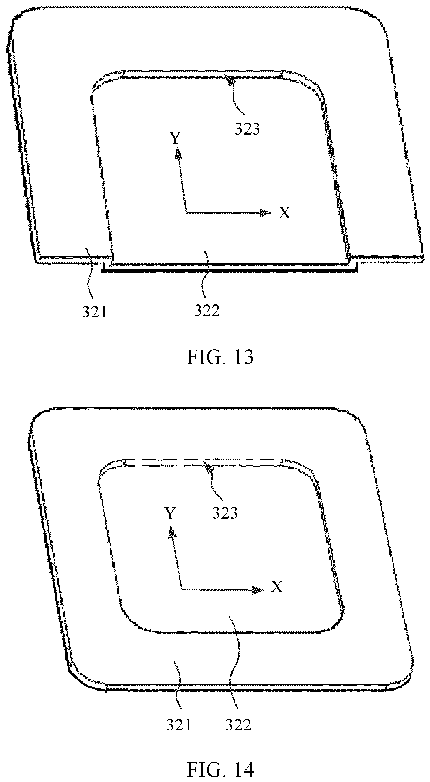

FIG. 13 is a schematic diagram of a structure of a stiffener in a terminal with the stiffener according to this disclosure. As shown in FIG. 13, in a possible implementation, there are three first connection parts 321 and three second connection parts 323 in the stiffener 32, the three first connection parts 321 are respectively located on three sides of a first mounting part 322 that are consecutively connected, and each first connection part 321 is connected to one side of the first mounting part 322 through one second connection part 323. When a shape of the first mounting part 322 is a cuboid, the three first connection parts 321 are respectively located on two sides in a length direction of the first mounting part 322 and one side in a width direction between the two sides in the length direction of the first mounting part 322, or the three first connection parts 321 are respectively located on two sides in a width direction of the first mounting part 322 and one side in a length direction between the two sides in the width direction of the first mounting part 322. Extension directions of the first connection parts 321 may be the same. For example, a length of a 1^{st} first connection part 321 in an extension direction (in an X direction) in FIG. 13, a length of a 2^{nd} first connection part 321 in the extension direction (in the X direction) in FIG. 13, and a length of a 3^{rd} first connection part 321 in an extension direction (in a Y direction) in FIG. 13 are the same. Extension directions of the first connection parts 321 may be different. For example, a length of a 1^{st} first connection part 321 in an extension direction (in an X direction) in FIG. 13, a length of a 2^{nd} first connection part 321 in the extension direction (in the X direction) in FIG. 13, and a length of a 3^{rd} first connection part 321 in an extension direction (in a Y direction) in FIG. 13 are different.

FIG. 14 is a schematic diagram of a structure of a stiffener in a terminal with the stiffener according to an example of this disclosure. As shown in FIG. 14, in a possible implementation, there are four first connection parts 321 and four second connection parts 323 in the stiffener 32, and each first connection part 321 is connected to one side of a first mounting part 322 by using one second connection part 323. That is, when a shape of the first mounting part 322 is a cuboid, sides of the first mounting part 322 in length directions and sides of the first mounting part 322 in width directions each are connected to one first connection part 321 through the second connection part 323. Lengths of the first connection parts 321 in extension directions may be the same, or lengths of the first connection parts 321 in extension directions may be different. The first connection parts 321 may be integrally formed or connected to each other.

It should be noted that quantities and positions of first connection parts 321 in the stiffener 32 are not limited to the foregoing implementations, and the foregoing implementations are only some examples. As a quantity of first connection parts 321 increases, stability of a connection between the stiffener 32 and the support member (namely, the metal middle plate 221) is further improved.

As shown in FIG. 14, in some examples, adjacent first connection parts 321 are connected, adjacent second connection parts 323 are connected, and there is a rounded chamfer or an oblique chamfer at a joint between the adjacent second connection parts 323. That is, smooth transition is performed between the adjacent second connection parts 323 in a rounded corner or an oblique corner.

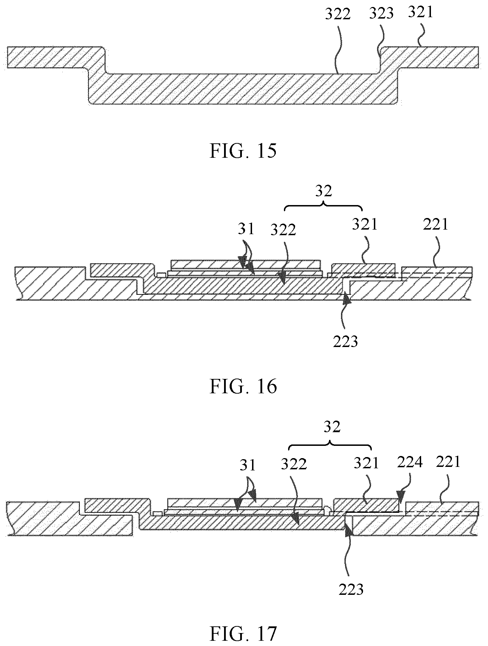

FIG. 15 is a fourth sectional view at B-B in FIG. 8. As shown in FIG. 15, thickness of a first connection part 321 is less than or equal to thickness of a first mounting part 322. In this disclosure, the first mounting part 322 in the stiffener 32 is configured to carry a fingerprint recognition module 31. If strength of the first mounting part 322 is low, the fingerprint recognition module 31 carried on the first mounting part 322 may tilt, affecting fingerprint recognition of a user. Therefore, thickness of the first mounting part 322 is set to be greater than or equal to thickness of the first connection part 321, so that support strength of the first mounting part 322 is ensured.

Optionally, the thickness of the first mounting part 322 ranges from 0.2 mm to 0.4 mm. That is, the thickness of the first mounting part 322 is greater than or equal to 0.2 mm, and the thickness of the first mounting part 322 is less than or equal to 0.4 mm.

FIG. 16 is a schematic diagram of a structure of a first support member, a stiffener, and a fingerprint recognition module in a terminal with the stiffener according to an example of this disclosure. As shown in FIG. 16, in a possible implementation, a bottom wall of a first accommodation area 223 presses against a first mounting part 322. The first mounting part 322 located in the first accommodation area 223 carries a fingerprint recognition module 31. In other words, the bottom wall of the first accommodation area 223 may fit the first mounting part 322, and the bottom wall of the first accommodation area 223 supports the first mounting part 322, so that the first mounting part 322 can more stably support the fingerprint recognition module 31.

FIG. 17 is a schematic diagram of a structure of a second support member, a stiffener, and a fingerprint recognition module in a terminal with the stiffener according to an example of this disclosure. As shown in FIG. 17 and FIG. 4, in another possible implementation, a bottom wall of the first accommodation area 223 is connected to a lower surface of the support member (namely, the metal middle plate 221), and the lower surface of the support member is a surface of the support member facing the housing 10. The first accommodation area 223 is a through slot that penetrates the metal middle plate 221, and openings at opposite ends of the first accommodation area 223 face the display 10 and the rear cover 21 respectively. In this way, the first accommodation area 223 can accommodate the entire fingerprint recognition module 31 or most of the fingerprint recognition module 31, so that overall thickness of the mobile phone is further reduced.

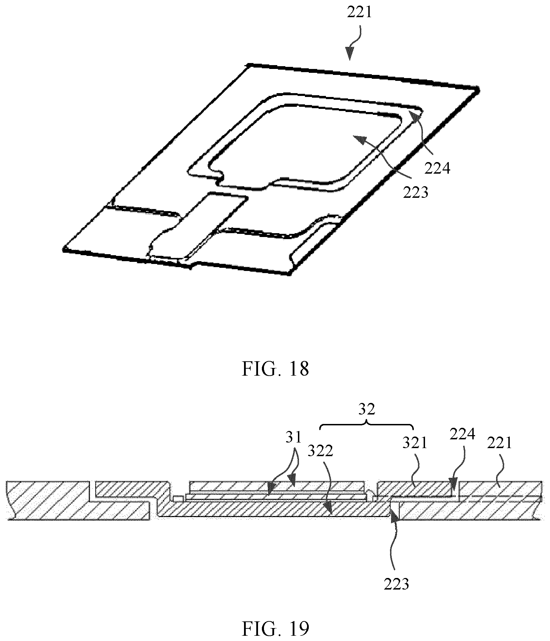

FIG. 18 is a partial schematic diagram of a metal middle plate of a terminal with a stiffener according to an example of this disclosure. As shown in FIG. 17 and FIG. 18, in this example, a second accommodation area 224 used to carry the first connection part 321 is provided on the support member, the second accommodation area 224 is connected to the first accommodation area 223, and an opening of the second accommodation area 224 faces the display 10. An opening direction of the second accommodation area 224 is the same as an opening direction of the first accommodation area 223, both facing the display 10, and the first connection part 321 is connected to a bottom wall of the second accommodation area 224. In this way, a part of the first connection part 321 is also located in the metal middle plate 221, so that overall thickness of the mobile phone is further reduced.

A quantity and positions of the second accommodation areas 224 are determined based on a quantity and positions of the first connection parts 321 respectively. That is, the quantity of the second accommodation areas 224 is the same as the quantity of the first connection parts 321, and the position of the first connection part 321 is opposite to the position of the second accommodation area 224. After the first connection part 321 extends out of the first accommodation area 223, the second accommodation area 224 is disposed in an area, opposite to the first connection part 321, on the metal middle plate 221, so that the second accommodation area 224 carries the first connection part 321. A possible implementation of the first connection part 321 is described in detail in the foregoing example, and details are not described herein in this example.

In the foregoing example, the second accommodation area 224 is disposed on the support member. After the first connection part 321 is connected to the bottom wall of the second accommodation area 224, there may be the following position relationships between an upper surface of the support member, an upper surface of the first connection part 321, and an upper surface of the fingerprint recognition module 31.

As shown in FIG. 4 and FIG. 16, in a possible implementation, a distance between the upper surface of the fingerprint recognition module 31 and the display 10 is less than a distance between the upper surface of the first connection part 321 and the display 10, that is, the upper surface of the fingerprint recognition module 31 and the upper surface of the first connection part 321 are located in different planes, and the upper surface of the fingerprint recognition module 31 is closer to the display 10 than the upper surface of the first connection part 321. In this case, thickness of the first mounting part 322 is greater than thickness of the first connection part 321. The upper surface of the fingerprint recognition module 31 is a surface of the fingerprint recognition module 31 facing the display 10, and the upper surface of the first connection part 321 is a surface of the first connection part 321 facing the display 10. In addition, a distance between the upper surface of the first connection part 321 and the display 10 is less than a distance between the metal middle plate 221 and the display 10, that is, a part of the first connection part 321 is located outside the second accommodation area 224. In this way, a part of the first connection part 321 is also located in the metal middle plate 221, so that overall thickness of the mobile phone is further reduced.

As shown in FIG. 4 and FIG. 17, based on the example in FIG. 16, a difference between this example and the example in FIG. 16 lies in that, in this example, a distance between the upper surface of the fingerprint recognition module 31 and the display 10 is equal to a distance between the upper surface of the first connection part 321 and the display 10. In this case, thickness of the first mounting part 322 is equal to thickness of the first connection part 321, thereby increasing space of the first accommodation area 223. In this way, a part of the first connection part 321 is located in the metal middle plate 221, and the entire fingerprint recognition module 31 is located in the first accommodation area 223, so that overall thickness of the mobile phone is further reduced.

FIG. 19 is a schematic diagram of a structure of a third support member, a stiffener, and a fingerprint recognition module in a terminal with the stiffener according to an example of this disclosure. As shown in FIG. 4 and FIG. 19, in a possible implementation, a distance between an upper surface of the fingerprint recognition module 31 and the display 10 is equal to a distance between an upper surface of the first connection part 321 and the display 10, that is, the upper surface of the fingerprint recognition module 31 and the upper surface of the first connection part 321 are located in a same plane. The upper surface of the fingerprint recognition module 31 is a surface of the fingerprint recognition module 31 facing the display 10, and the upper surface of the first connection part 321 is a surface of the first connection part 321 facing the display 10. In addition, a distance between the upper surface of the first connection part 321 and the display 10 is equal to a distance between the metal middle plate 221 and the display 10, that is, the entire first connection part 321 is located in the second accommodation area 224, so that overall thickness of the mobile phone is further reduced.

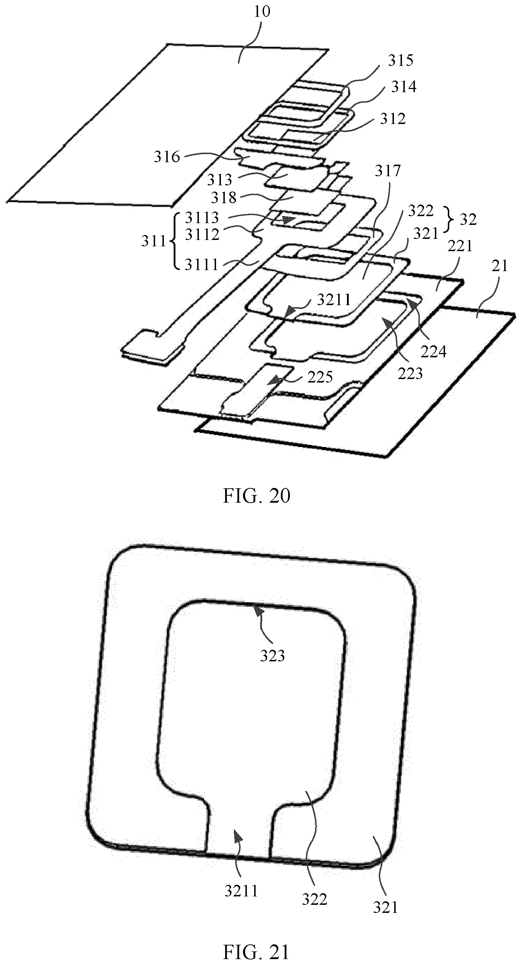

Optionally, the first connection part 321 matches the second accommodation area 324. That is, the first connection part 321 and the second accommodation area 324 have a same shape. In this way, the first connection part 321 can totally cover the second accommodation area 324, so that overall aesthetics of the metal middle plate 221 is increased. FIG. 20 is an exploded view corresponding to FIG. 4. As shown in FIG. 4 and FIG. 20, in this disclosure, the fingerprint recognition module 31 includes a circuit board 311, and a light filter 312 and a fingerprint recognition chip 313 that are disposed in a stacked manner. The circuit board 311 is electrically connected to the fingerprint recognition chip 313, the light filter 312 faces the display 10, and the fingerprint recognition chip 313 is connected to the first mounting part 322. When a finger of a user touches the display 10, light emitted by the display 10 penetrates a surface of the display 10, and illuminates a fingerprint texture of the finger of the user. Fingerprint-reflected light penetrates the display 10 and enters the light filter 312. The light filter 312 decreases reflected light, increases a light penetration amount, and filters out light that interferes fingerprint recognition. Then, the fingerprint-reflected light enters the fingerprint recognition chip 313. The fingerprint recognition chip 313 converts an optical signal into an electrical signal by using many tiny pixels, and transmits the electrical signal to a processor inside a mobile phone through the circuit board 311. The processor processes the electrical signal to implement unlocking.

The circuit board 311 may be a flexible circuit board, and the flexible circuit board is easy to bend, so as to connect to the processor inside the mobile phone. The light filter 312 may also be an optical filter, and a size of the optical filter 312 may be less than or equal to a size of the fingerprint recognition chip 313. A connection manner between the light filter 312 and the fingerprint recognition chip 313 includes but is not limited to bonding, and a connection manner between the fingerprint recognition chip 313 and the first mounting part 322 includes but is not limited to bonding. The circuit board 311 is electrically connected to the fingerprint recognition chip 313 through a metal filament. The metal filament may be, but is not limited to, a gold wire or a copper wire. The circuit board 311 is connected to the fingerprint recognition chip 313 through wire bonding. Wire bonding (Wire Bonding) may be referred to as press welding, binding, bonding, or wire bonding. Wire bonding indicates using a metal filament and using a thermal pressure or ultrasonic energy to complete a connection between internal connection lines of a solid-state circuit in a microelectronic component, that is, a connection between the circuit board 311 and the fingerprint recognition chip 313.

In this disclosure, the circuit board 311 is electrically connected to the fingerprint recognition chip 313 through the metal filament. To prevent the connection between the circuit board 311 and the fingerprint recognition chip 313 from being broken or falling off due to extrusion of the metal filament, in some examples, a closing ring 314 is further included. The closing ring 314 is located between the display 10 and the circuit board 311, and the closing ring 314 is connected to the circuit board 311. The fingerprint recognition chip 313 and the light filter 312 are located in the closing ring 314. The closing ring 314 presses against the display 10 and the circuit board 311, and protects the metal filament that connects the circuit board 311 and the fingerprint recognition chip 313 through the closing ring 314, so that the metal filament is prevented from being broken or falling off due to extrusion. The metal filament may be located in an area enclosed by the closing ring 314, that is, a joint between the circuit board 311 and the fingerprint recognition chip 313 is located in the area enclosed by the closing ring 314. Alternatively, the metal filament may be located outside the area enclosed by the closing ring 314, that is, the joint between the circuit board 311 and the fingerprint recognition chip 313 is located outside the area enclosed by the closing ring 314. A material of the closing ring 314 includes but is not limited to metal or plastic.

Optionally, a first foam 315 is connected to the closing ring 314, a second foam 316 is connected to the circuit board 311, a surface of the first foam 315 facing the display 10 is aligned with a surface of the second foam 316 facing the display 10, the first foam 315 functions as a buffer between the display 10 and the closing ring 314, and the second foam 316 functions as a buffer between the display 10 and the circuit board 311, so that pressures on the closing ring 314 and the circuit board 311 are reduced when the display 10 is pressed.

In this disclosure, the circuit board 311 includes an extension part 3111 and a fastening part 3112 connected to the extension part 3111. The fastening part 3112 is connected to the first mounting part 322, the fastening part 3112 is provided with a mounting hole 3113, and the fingerprint recognition chip 313 is located in the mounting hole 3113. That is, the circuit board 311 and the fingerprint recognition chip 313 are disposed on a same layer, and both the circuit board 311 and the fingerprint recognition chip 313 are connected to the first mounting part 322. The mounting hole 3113 is disposed on the fastening part 3112, so that the fingerprint recognition chip 313 is placed in the mounting hole 3113. The mounting hole 3113 may match the fingerprint recognition chip 313. For example, if the fingerprint recognition chip 313 is rectangular or circular, the corresponding mounting hole 3113 may be a rectangular hole or a round hole. A shape of the fingerprint recognition chip 313 is not limited to the foregoing shape. The fingerprint recognition chip 313 may also be in an abnormal shape or an ellipse. There is a gap between an inner edge of the mounting hole 3113 and an edge of the fingerprint recognition chip 313. In this way, it is convenient to place the fingerprint recognition chip 313 in the mounting hole 3113.

The extension part 3111 is configured to connect to the processor inside the mobile phone. When a position of the processor is fixed, a connection position between the extension part 3111 and the processor inside the mobile phone is determined based on the position of the processor. Therefore, in this disclosure, bending positions of the extension part 3111 are different. The extension part 3111 may be directly bent at a joint between the extension part 3111 and the fastening part 3112 to connect to the processor, or the extension part 3111 may be bent at another position of the extension part 3111.

FIG. 21 is a schematic diagram of a structure of a stiffener in a terminal with the stiffener according to an example of this disclosure. As shown in FIG. 20 and FIG. 21, in some examples, the first connection part 321 is provided with a first guide trough 3211, the first guide trough 3211 is connected to the first mounting part 322, and the extension part 3111 passes through the first guide trough 3211 and is bent to an outer side of the support member. The extension part 3111 is guided to, through the first guide trough 3211, a position relative to the processor, and then the extension part 3111 is bent to connect to the processor. In this case, a bending position of the extension part 3111 is close to the first connection part 321. The first guide trough 3211 may be disposed on each first connection part 321, and the extension part 3111 is selected and guided to extend to different positions based on the processor at different positions.

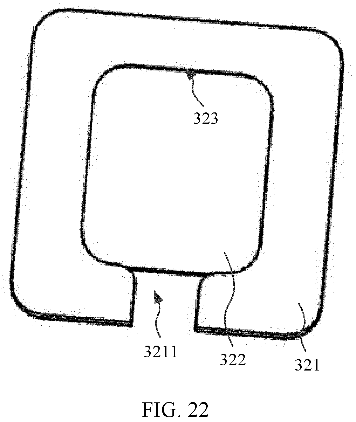

FIG. 22 is a schematic diagram of a structure of a stiffener in a terminal with the stiffener according to an example of this disclosure. As shown in FIG. 20 and FIG. 22, based on the example in FIG. 21, in this example, the first guide trough 3211 is also connected to the first accommodation area 223, that is, the first guide trough 3211 is a notch or an opening located on the first connection part 321. The extension part 3111 is guided to, through the first guide trough 3211, a position opposite to the processor, and then the extension part 3111 is bent to connect to the processor located above the support member.

As shown in FIG. 20, in some other examples, the support member is provided with a second guide trough 225, the second guide trough 225 is connected to the first guide trough 3211, an extension direction of the second guide trough 225 is the same as an extension direction of the first guide trough 3211, and the extension part 3111 passes through the first guide trough 3211 and the second guide trough 225 and is bent. The extension part 3111 is guided to, through the first guide trough 3211 and the second guide trough 225, a position relative to the processor, and then the extension part 3111 is bent to connect to the processor. In this case, a bending position of the extension part 3111 is far away from the first connection part 321. The second guide trough 225 is disposed, so that a length of the guided extension part 3111 is increased, and the extension part 3111 is conveniently connected to the processor at different positions. As shown in FIG. 20, the following describes in detail an assembly process and an installation process of the fingerprint recognition assembly 30 by using specific examples.

In the assembly process of the fingerprint recognition assembly 30, first, heat pressure adhesive is applied to the fastening part 3112 in the circuit board 311, and the fastening part 3112 in the circuit board 311 is connected to the first mounting part 322 through first connection adhesive 317 (for example, heat pressure adhesive). A side wall of the fastening part 3112 presses against a side of the first mounting part 322. Second, second connection adhesive 318 (for example, a DAF film) is attached to the fingerprint recognition chip 313. The DAF film includes two layers of adhesive surfaces and a thermally conductive resin layer sandwiched between the two layers of adhesive surfaces. A first layer of adhesive surface is bonded to the fingerprint recognition chip 313, a second layer of adhesive surface is bonded to the first mounting part 322, and the fingerprint recognition chip 313 is located in the mounting hole 3113. Then, the light filter 312 is stuck to the fingerprint recognition chip 313, and the closing ring 314 is stuck to the fastening part 3112. The metal filament that connects the circuit board 311 and the fingerprint recognition chip 313 is located in the area enclosed by the closing ring 314, and the fingerprint recognition chip 313 and the light filter 312 are located in the area enclosed by the closing ring 314. Finally, the first foam 315 is stuck to the closing ring 314, and the second foam 316 is stuck to the fastening part 3112 outside the closing ring 314.

The installation process of the fingerprint recognition assembly 30 is installing the assembled fingerprint recognition assembly 30 on the metal middle plate 221. Foam adhesive (which may also be referred to as a double-sided tape) is adhered to the second accommodation area 224 in the metal middle plate 221, the first connection part 321 in the stiffener 32 in the fingerprint recognition assembly 30 is pressed against the bottom wall of the second accommodation area 224, and a surface of the first connection part 321 facing the display 10 is pressed to activate the foam adhesive, so that the first connection part 321 is securely connected to the second accommodation area 224.

## Claims

1. A terminal with a stiffener (32), comprising a display (10), a housing (20), and a fingerprint recognition assembly (30), wherein
the display (10) and the housing (20) jointly form a receptacle (40), and the fingerprint recognition assembly (30) is located in the receptacle (40);
the fingerprint recognition assembly (30) comprises a fingerprint recognition module (31) and the stiffener (32), the stiffener (32) comprises a first mounting part (322) configured to carry the fingerprint recognition module (31) and at least one first connection part (321), and the first connection part (321) is connected to a side of the first mounting part (322);
the housing (20) comprises a support member being a middle frame (22) located between the display (10) and a rear cover (21) of the housing (20), the support member (22) is provided with a first accommodation area (223) being a through slot penetrating the middle frame (22), wherein openings at opposite ends of the first accommodation area (223) face the display (10) and the rear cover (21) of the housing (20), respectively, the first mounting part (322) is located in the first accommodation area (223), and the first connection part (321) extends out of the first accommodation area (223) and is connected to the support member; and
the support member (22) is provided with a second accommodation area (224) used to carry the first connection part (321), the second accommodation area (224) is connected to the first accommodation area (223), and an opening of the second accommodation area (224) faces the display (10).

2. The terminal with a stiffener (32) according to claim 1, wherein the stiffener (32) further comprises at least one second connection part (323), and the first mounting part (322) and the first connection part (321) are connected through the second connection part (323).

3. The terminal with a stiffener (32) according to claim 2, wherein an included angle between the second connection part (323) and the first mounting part (322) is greater than or equal to 90 degrees and less than or equal to 160 degrees.

4. The terminal with a stiffener (32) according to claim 1, wherein there are at least two first connection parts (321), the first connection parts (321) each are connected to a different side of the first mounting part (322), and a quantity of first connection parts (321) is less than or equal to a quantity of sides of the first mounting part (322).

5. The terminal with a stiffener (32) according to claim 1, wherein thickness of the first connection part (321) is less than or equal to thickness of the first mounting part (322).

6. The terminal with a stiffener (32) according to claim 2, wherein the first mounting part (322), the first connection part (321), and the second connection part (323) are integrally formed.

7. The terminal with a stiffener (32) according to any one of claims 1 to 6,
wherein the display (10) is connected to one surface of the middle frame (22), and the rear cover 21 of the housing (20) is connected to another surface of the middle frame (22), and
wherein the display (10), the rear cover (21) and the middle frame (22) jointly form the receptacle (40) accommodating the fingerprint recognition assembly (30).

8. The terminal with a stiffener (32) according to any one of claims 1 to 6,
wherein the middle frame (22) includes a metal middle plate (221) and a side frame (222), the side frame (222) being disposed around a periphery of the metal middle plate (221).

9. The terminal with a stiffener (32) according to any one of claims 1 to 8, wherein a distance between an upper surface of the fingerprint recognition module (31) and the display (10) is less than or equal to a distance between an upper surface of the first connection part (321) and the display (10), the upper surface of the fingerprint recognition module (31) is a surface of the fingerprint recognition module (31) facing the display (10), and the upper surface of the first connection part (321) is a surface of the first connection part (321) facing the display (10).

10. The terminal with a stiffener (32) according to any one of claims 1 to 8, wherein a distance between an upper surface of the first connection part (321) and the display (10) is equal to a distance between an upper surface of the support member and the display (10), the upper surface of the first connection part (321) is a surface of the first connection part (321) facing the display (10), and the upper surface of the support member is a surface of the support member facing the display (10).

11. The terminal with a stiffener (32) according to any one of claims 1 to 8, wherein the fingerprint recognition assembly (30) comprises a circuit board (311), and a light filter (312) and a fingerprint recognition chip (313) that are disposed in a stacked manner, the circuit board (311) is connected to the fingerprint recognition chip (313), the light filter (312) faces the display (10), and the fingerprint recognition chip (313) is connected to the first mounting part (322).

12. The terminal with a stiffener (32) according to claim 11, wherein the circuit board (311) comprises an extension part (3111) and a fastening part (3112) connected to the extension part (3111), the fastening part (3112) is connected to the first mounting part (322), the fastening part (3112) is provided with a mounting hole (3113), and the fingerprint recognition chip (313) is located in the mounting hole (3113).

13. The terminal with a stiffener (32) according to claim 12, wherein the first connection part (321) is provided with a first guide trough (3211), and the extension part (3111) passes through the first guide trough (3211) and is bent to an outer side of the support member.

14. The terminal with a stiffener (32) according to claim 13, wherein the support member is provided with a second guide trough (225), the second guide trough (225) is connected to the first guide trough (3211), an extension direction of the second guide trough (225) is the same as an extension direction of the first guide trough (3211), and the extension part (3111) passes through the first guide trough (3211) and the second guide trough (225) and is bent to the outer side of the support member (22).

## Patentansprüche

1. Endgerät mit einer Aussteifung (32), umfassend eine Anzeige (10), ein Gehäuse (20) und eine Fingerabdruckerkennungsbaugruppe (30), wobei
die Anzeige (10) und das Gehäuse (20) gemeinsam eine Aufnahme (40) bilden und sich die Fingerabdruckerkennungsbaugruppe (30) in der Aufnahme (40) befindet;
die Fingerabdruckerkennungsbaugruppe (30) ein Fingerabdruckerkennungsmodul (31) und die Aussteifung (32) umfasst, wobei die Aussteifung (32) ein erstes Montageteil (322), das zum Tragen des Fingerabdruckerkennungsmoduls (31) konfiguriert ist, und mindestens ein erstes Verbindungsteil (321) umfasst und das erste Verbindungsteil (321) mit einer Seite des ersten Montageteils (322) verbunden ist;
das Gehäuse (20) ein Stützelement umfasst, das ein mittlerer Rahmen (22) ist, der sich zwischen der Anzeige (10) und einer hinteren Abdeckung (21) des Gehäuses (20) befindet, wobei das Stützelement (22) mit einem ersten Unterbringungsbereich (223) versehen ist, der ein durchgehender Schlitz ist, der den mittleren Rahmen (22) durchdringt, wobei Öffnungen an gegenüberliegenden Enden des ersten Unterbringungsbereichs (223) der Anzeige (10) bzw. der hinteren Abdeckung (21) des Gehäuses (20) zugewandt sind, sich das erste Montageteil (322) in dem ersten Unterbringungsbereich (223) befindet und sich das erste Verbindungsteil (321) aus dem ersten Unterbringungsbereich (223) erstreckt und mit dem Stützelement verbunden ist; und
das Stützelement (22) mit einem zweiten Unterbringungsbereich (224) versehen ist, der zum Tragen des ersten Verbindungsteils (321) verwendet wird, wobei der zweite Unterbringungsbereich (224) mit dem ersten Unterbringungsbereich (223) verbunden ist und eine Öffnung des zweiten Unterbringungsbereichs (224) der Anzeige (10) zugewandt ist.

2. Endgerät mit einer Aussteifung (32) nach Anspruch 1, wobei die Aussteifung (32) ferner mindestens ein zweites Verbindungsteil (323) umfasst und das erste Montageteil (322) und das erste Verbindungsteil (321) über das zweite Verbindungsteil (323) verbunden sind.

3. Endgerät mit einer Aussteifung (32) nach Anspruch 2, wobei ein eingeschlossener Winkel zwischen dem zweiten Verbindungsteil (323) und dem ersten Montageteil (322) größer oder gleich 90 Grad und kleiner oder gleich 160 Grad ist.

4. Endgerät mit einer Aussteifung (32) nach Anspruch 1, wobei mindestens zwei erste Verbindungsteile (321) vorhanden sind, wobei die ersten Verbindungsteile (321) jeweils mit einer anderen Seite des ersten Montageteils (322) verbunden sind und eine Anzahl von ersten Verbindungsteilen (321) kleiner oder gleich einer Anzahl von Seiten des ersten Montageteils (322) ist.

5. Endgerät mit einer Aussteifung (32) nach Anspruch 1, wobei eine Dicke des ersten Verbindungsteils (321) kleiner oder gleich einer Dicke des ersten Montageteils (322) ist.

6. Endgerät mit einer Aussteifung (32) nach Anspruch 2, wobei das erste Montageteil (322), das erste Verbindungsteil (321) und das zweite Verbindungsteil (323) einstückig ausgebildet sind.

7. Endgerät mit einer Aussteifung (32) nach einem der Ansprüche 1 bis 6,
wobei die Anzeige (10) mit einer Oberfläche des mittleren Rahmens (22) verbunden ist und die hintere Abdeckung (21) des Gehäuses (20) mit einer anderen Oberfläche des mittleren Rahmens (22) verbunden ist, und
wobei die Anzeige (10), die hintere Abdeckung (21) und der mittlere Rahmen (22) gemeinsam die Aufnahme (40) bilden, in der die Fingerabdruckerkennungsbaugruppe (30) untergebracht ist.

8. Endgerät mit einer Aussteifung (32) nach einem der Ansprüche 1 bis 6,
wobei der mittlere Rahmen (22) eine mittlere Metallplatte (221) und einen Seitenrahmen (222) beinhaltet, wobei der Seitenrahmen (222) um einen Umfang der mittleren Metallplatte (221) angeordnet ist.

9. Endgerät mit einer Aussteifung (32) nach einem der Ansprüche 1 bis 8, wobei ein Abstand zwischen einer oberen Oberfläche des Fingerabdruckerkennungsmoduls (31) und der Anzeige (10) kleiner oder gleich einem Abstand zwischen einer oberen Oberfläche des ersten Verbindungsteils (321) und der Anzeige (10) ist, wobei die obere Oberfläche des Fingerabdruckerkennungsmoduls (31) eine Oberfläche des Fingerabdruckerkennungsmoduls (31) ist, die der Anzeige (10) zugewandt ist, und die obere Oberfläche des ersten Verbindungsteils (321) eine Oberfläche des ersten Verbindungsteils (321) ist, die der Anzeige (10) zugewandt ist.

10. Endgerät mit einer Aussteifung (32) nach einem der Ansprüche 1 bis 8, wobei ein Abstand zwischen einer oberen Oberfläche des ersten Verbindungsteils (321) und der Anzeige (10) gleich einem Abstand zwischen einer oberen Oberfläche des Stützelements und der Anzeige (10) ist, wobei die obere Oberfläche des ersten Verbindungsteils (321) eine Oberfläche des ersten Verbindungsteils (321) ist, die der Anzeige (10) zugewandt ist, und die obere Oberfläche des Stützelements eine Oberfläche des Stützelements ist, die der Anzeige (10) zugewandt ist.

11. Endgerät mit einer Aussteifung (32) nach einem der Ansprüche 1 bis 8, wobei die Fingerabdruckerkennungsbaugruppe (30) eine Leiterplatte (311) sowie einen Lichtfilter (312) und einen Fingerabdruckerkennungschip (313), die gestapelt angeordnet sind, umfasst, wobei die Leiterplatte (311) mit dem Fingerabdruckerkennungschip (313) verbunden ist, der Lichtfilter (312) der Anzeige (10) zugewandt ist und der Fingerabdruckerkennungschip (313) mit dem ersten Montageteil (322) verbunden ist.

12. Endgerät mit einer Aussteifung (32) nach Anspruch 11, wobei die Leiterplatte (311) ein Erstreckungsteil (3111) und ein Befestigungsteil (3112), das mit dem Erstreckungsteil (3111) verbunden ist, umfasst, wobei das Befestigungsteil (3112) mit dem ersten Montageteil (322) verbunden ist, das Befestigungsteil (3112) mit einem Montageloch (3113) versehen ist und sich der Fingerabdruckerkennungschip (313) in dem Montageloch (3113) befindet.

13. Endgerät mit einer Aussteifung (32) nach Anspruch 12, wobei das erste Verbindungsteil (321) mit einer ersten Führungsrinne (3211) versehen ist und das Erstreckungsteil (3111) durch die erste Führungsrinne (3211) verläuft und zu einer Außenseite des Stützelements gebogen ist.

14. Endgerät mit einer Aussteifung (32) nach Anspruch 13, wobei das Stützelement mit einer zweiten Führungsrinne (225) versehen ist, wobei die zweite Führungsrinne (225) mit der ersten Führungsrinne (3211) verbunden ist, eine Erstreckungsrichtung der zweiten Führungsrinne (225) die gleiche wie eine Erstreckungsrichtung der ersten Führungsrinne (3211) ist und das Erstreckungsteil (3111) durch die erste Führungsrinne (3211) und die zweite Führungsrinne (225) verläuft und zu der Außenseite des Stützelements (22) gebogen ist.

## Revendications

1. Terminal avec un raidisseur (32), comprenant un écran (10), un boîtier (20), et un ensemble de reconnaissance d'empreintes digitales (30), dans lequel
l'écran (10) et le boîtier (20) forment conjointement un réceptacle (40), et l'ensemble de reconnaissance d'empreintes digitales (30) est situé dans le réceptacle (40) ;
l'ensemble de reconnaissance d'empreintes digitales (30) comprend un module de reconnaissance d'empreintes digitales (31) et le raidisseur (32), le raidisseur (32) comprend une première pièce de montage (322) configurée pour porter le module de reconnaissance d'empreintes digitales (31) et au moins une première pièce de connexion (321), et la première pièce de connexion (321) est reliée à un côté de la première pièce de montage (322) ;
le boîtier (20) comprend un élément de soutien étant un cadre intermédiaire (22) situé entre l'écran (10) et un couvercle arrière (21) du boîtier (20), l'élément de soutien (22) est pourvu d'une première zone de logement (223) étant une fente traversante pénétrant le cadre intermédiaire (22), dans lequel des ouvertures aux extrémités opposées de la première zone de logement (223) font face à l'écran (10) et au couvercle arrière (21) du boîtier (20), respectivement, la première pièce de montage (322) est située dans la première zone de logement (223), et la première pièce de connexion (321) s'étend hors de la première zone de logement (223) et est reliée à l'élément de soutien ; et
l'élément de soutien (22) est pourvu d'une seconde zone de logement (224) utilisée pour porter la première pièce de connexion (321), la seconde zone de logement (224) est reliée à la première zone de logement (223), et une ouverture de la seconde zone de logement (224) fait face à l'écran (10).

2. Terminal avec un raidisseur (32) selon la revendication 1, dans lequel le raidisseur (32) comprend en outre au moins une seconde pièce de connexion (323), et la première pièce de montage (322) et la première pièce de connexion (321) sont reliées par l'intermédiaire de la seconde pièce de connexion (323).

3. Terminal avec un raidisseur (32) selon la revendication 2, dans lequel un angle inclus entre la seconde pièce de connexion (323) et la première pièce de montage (322) est supérieur ou égal à 90 degrés et inférieur ou égal à 160 degrés.

4. Terminal avec un raidisseur (32) selon la revendication 1, dans lequel il y a au moins deux premières pièces de connexion (321), les premières pièces de connexion (321) étant chacune reliées à un côté différent de la première pièce de montage (322), et une quantité de premières pièces de connexion (321) est inférieure ou égale à une quantité de côtés de la première pièce de montage (322) .

5. Terminal avec un raidisseur (32) selon la revendication 1, dans lequel l'épaisseur de la première pièce de connexion (321) est inférieure ou égale à l'épaisseur de la première pièce de montage (322) .

6. Terminal avec un raidisseur (32) selon la revendication 2, dans lequel la première pièce de montage (322), la première pièce de connexion (321) et la seconde pièce de connexion (323) sont formées d'un seul tenant.

7. Terminal avec un raidisseur (32) selon l'une quelconque des revendications 1 à 6,
dans lequel l'écran (10) est relié à une surface du cadre intermédiaire (22), et le couvercle arrière (21) du boîtier (20) est relié à une autre surface du cadre intermédiaire (22), et
dans lequel l'écran (10), le couvercle arrière (21) et le cadre intermédiaire (22) forment conjointement le réceptacle (40) logeant l'ensemble de reconnaissance d'empreintes digitales (30).

8. Terminal avec un raidisseur (32) selon l'une quelconque des revendications 1 à 6,
dans lequel le cadre central (22) comporte une plaque intermédiaire métallique (221) et un cadre latéral (222), le cadre latéral (222) étant disposé autour d'une périphérie de la plaque intermédiaire métallique (221).

9. Terminal avec un raidisseur (32) selon l'une quelconque des revendications 1 à 8, dans lequel une distance entre une surface supérieure du module de reconnaissance d'empreintes digitales (31) et l'écran (10) est inférieure ou égale à une distance entre une surface supérieure de la première pièce de connexion (321) et de l'écran (10), la surface supérieure du module de reconnaissance d'empreintes digitales (31) est une surface du module de reconnaissance d'empreintes digitales (31) faisant face à l'écran (10), et la surface supérieure de la première pièce de connexion (321) est une surface de la première pièce de connexion (321) faisant face à l'écran (10).

10. Terminal avec un raidisseur (32) selon l'une quelconque des revendications 1 à 8, dans lequel une distance entre une surface supérieure de la première pièce de connexion (321) et de l'écran (10) est égale à une distance entre une surface supérieure de l'élément de soutien et de l'écran (10), la surface supérieure de la première pièce de connexion (321) est une surface de la première pièce de connexion (321) faisant face à l'écran (10), et la surface supérieure de l'élément de soutien est une surface de l'élément de soutien faisant face à l'écran (10).

11. Terminal avec un raidisseur (32) selon l'une quelconque des revendications 1 à 8, dans lequel l'ensemble de reconnaissance d'empreintes digitales (30) comprend une carte de circuit (311), et un filtre de lumière (312) et une puce de reconnaissance d'empreintes digitales (313) qui sont disposés de manière empilée, la carte de circuit imprimé (311) est reliée à la puce de reconnaissance d'empreintes digitales (313), le filtre de lumière (312) fait face à l'écran (10) et la puce de reconnaissance d'empreintes digitales (313) est reliée à la première pièce de montage (322).

12. Terminal avec un raidisseur (32) selon la revendication 11, dans lequel la carte de circuit imprimé (311) comprend une pièce d'extension (3111) et une pièce de fixation (3112) reliée à la pièce d'extension (3111), la pièce de fixation (3112) est reliée à la première pièce de montage (322), la pièce de fixation (3112) est pourvue d'un trou de montage (3113), et la puce de reconnaissance d'empreintes digitales (313) est située dans le trou de montage (3113).

13. Terminal avec un raidisseur (32) selon la revendication 12, dans lequel la première pièce de connexion (321) est pourvue d'un premier creux de guidage (3211), et la pièce d'extension (3111) traverse le premier creux de guidage (3211) et est courbée vers un côté externe de l'élément de soutien.

14. Terminal avec un raidisseur (32) selon la revendication 13, dans lequel l'élément de soutien est pourvu d'un second creux de guidage (225), le second creux de guidage (225) est relié au premier creux de guidage (3211), une direction d'extension du second creux de guidage (225) est identique à une direction d'extension du premier creux de guidage (3211), et la pièce d'extension (3111) traverse le premier creux de guidage (3211) et le second creux de guidage (225) et est courbée au côté externe de l'élément de soutien (22).
